# EUROPEAN PATENT APPLICATION

(11) **EP 3 154 032 A1**
(43) Date of publication of application: **12.04.2017**
(21) Application number: 16192082.2
(22) Date of filing: 03.10.2016
(51) Int. Cl.: G07C 9/00, G06Q 20/32, B60R 25/20

(54) **SYSTEM AND METHOD FOR WIRELESSLY ACCESSING A VEHICLE**

(30) Priority: 06.10.2015 US 201562237635 P; 29.09.2016 US 201615280787
(71) Applicant: HUF NORTH AMERICA AUTOMOTIVE PARTS MFG. CORP., Milwaukee WI 53224 (US)
(72) Inventor: Odejerte, Antonio, Milwaukee, WI Wisconsin 53224 (US); Rehder, Benedikt, Milwaukee, WI Wisconsin 53224 (US); Qu, Joseph, Milwaukee, WI Wisconsin 53224 (US); Kaeufer, Uwe, Milwaukee, WI Wisconsin 53224 (US); Nantz, John, Milwaukee, WI Wisconsin 53224 (US)
(74) Representative: Wallin, Nicholas James

(57) **Abstract**

A method for accessing a vehicle includes placing a vehicle access device within a predetermined distance of a vehicle. The method also includes charging a first monetary value to a card. The method further includes accessing the vehicle after the first monetary value is charged to the card. The method also includes crediting a second monetary value to the card.

## Description

### FIELD

The present disclosure relates generally to a system and method for accessing a vehicle and more particularly to a system and method for accessing a vehicle using wireless communication.

### BACKGROUND

This section provides background information related to the present disclosure and is not necessarily prior art.

A vehicle may be accessed and operated by a user in various ways. In one example, a user may utilize a key to access and/or operate the vehicle. In another example, the user may utilize a wireless communication protocol (e.g., short-range radio wave communication, Wi-Fi, BLUETOOTH ®, near field communication (NFC), etc.) to access and/or operate the vehicle. For example, the operator may access and/or operate the vehicle by utilizing a wireless communication protocol controlled and powered by a key fob.

While known systems and methods for accessing a vehicle have proven acceptable for their intended use, such systems typically require a key fob that is dedicated to a particular vehicle. Such dedicated key fobs make operation of the vehicle difficult when the vehicle is operated by multiple users such as in a car-sharing program or in a fleet (i.e., police vehicles, taxi cabs, etc.).

### SUMMARY

This section provides a general summary of the disclosure, and is not a comprehensive disclosure of its full scope or all of its features.

According to one aspect, the present disclosure provides a system for accessing a vehicle using a wireless communication protocol. In some configurations, the wireless communication protocol may include a near field communication (NFC) protocol. The system may include the vehicle and a vehicle access device, such as a smartphone, a smart watch, or a computing device, for example. The vehicle may include an access system, an engine system, and a communication system. The access system may include one or more doors and a locking system. The locking system may include a locking control module and one or more locks configured to prevent access to the vehicle through the one or more doors. In particular, the locking module may be configured to change a state (e.g., locked or unlocked) of the locks in order to permit or prevent access to the vehicle through the one or more doors.

The engine system may include an engine and an engine control module. The engine control module may be in communication with the access system and/or the communication system to permit or prevent access to the engine. In particular, the engine control module may be in communication with the access system and/or the communication system to prevent an end user from operating the engine with the vehicle access device. The communication system may include one or more wireless communication nodes and a communication application. In some configurations, the wireless communication node may include an NFC node configured to communicate with the vehicle access device via the NFC protocol. The communication application may be in communication with the wireless communication node to facilitate communication between the vehicle and the vehicle access device.

The vehicle access device may include the communication application and a wireless communication node. In some configurations, the wireless communication node may include an NFC node configured to communicate with the vehicle via the NFC protocol. In particular, the wireless communication node of the vehicle access device may be configured to communicate with the wireless communication node of the vehicle. The communication application may be in communication with the wireless communication node of the vehicle access device to facilitate communication between the vehicle and the vehicle access device.

In some configurations, the vehicle and/or the vehicle access device may be configured to communicate with a credit and/or debit card. In this regard, the system may include a credit and/or debit card that communicates with the NFC node of the vehicle and/or the NFC node of the vehicle access device in order to permit the end user to access the vehicle. For example, the credit and/or debit card may communicate with the NFC nodes to permit the end user to change the state of the locks and/or change a state (e.g., ON or OFF) of the engine.

According to another configuration, the present disclosure provides a method for wirelessly accessing a vehicle. The method may include reserving a vehicle for use using a credit and/or debit card. The method may also include placing a vehicle access device within a predetermined distance of a vehicle. The method may also include transmitting information from a wireless communication system to the credit and/or debit card. In particular, the method may include transmitting information from an NFC node to the credit and/or debit card.

In some configurations, the method includes installing a communication application on a vehicle access device. The communication application may be configured to permit the end user to reserve and/or access the vehicle. In some configurations, the method may include logging into the communication application using one or more authentication credentials. The authentication credentials may include identification information of the debit and/or credit card that the end user used to reserve the vehicle.

The method may include approaching the vehicle and placing the vehicle access device, including the wireless communication node, within a predefined distance of a specific location on the vehicle. For example, the method may include placing the wireless communication node of the vehicle access device within a predefined distance of the wireless communication node of the vehicle. The method may further include authenticating the identity of the wireless communication device. In particular, the method may include transmitting an identification key between the vehicle and the vehicle access device to ensure that the vehicle access device is permitted to access the vehicle.

In some configurations, the method may include performing a point-of-sale (POS) transaction between the vehicle and the vehicle access device. For example, the wireless communication node on the vehicle and/or the wireless communication node on the vehicle access device may include a POS node. In this regard, the wireless communication node on the vehicle and/or the wireless communication node on the vehicle access device may be associated with the credit and/or debit card used by the end user to reserve the vehicle. Accordingly, the method may include placing the wireless communication node on the vehicle access device within a predetermined distance of the wireless communication node on the vehicle and processing a banking-like transaction. For example, the method may include tapping the vehicle access device on the vehicle within a predetermined distance of the wireless communication node of the vehicle. The method may also include charging a certain amount of money (e.g., a $1.00 fee) to the credit and/or debit card. The method may also include refunding the certain amount of money to the credit and/or debit card. For example, the method may include refunding the certain amount of money to the credit and/or debit at the end of a predetermined amount of time and/or at a predetermined time. For example, the method may include refunding the certain amount of money to the credit and/or debit card at the end of a period of time during which the end user is permitted to access the vehicle or at a predetermined time on a predetermined date.

According to another aspect, the present disclosure provides a system. The system may include a wireless communication node, a communication application, and a locking module. The wireless communication node may communicate with at least one of a vehicle access device and a vehicle control center. The communication application may charge a first monetary value to a card and may credit a second monetary value to the card. The locking module may permit access to a vehicle.

In some implementations, the card includes one of a credit card and a debit card.

In some implementations, the system includes a lock in communication with the locking module.

In some configurations, the first monetary value is less than or equal to one dollar. The second monetary value may be equal to the first monetary value.

In some implementations, the wireless communication node includes a near field communication node. The vehicle access device may include one of a smartphone, a smart watch, and a tablet computing device.

In some implementations, the communication application is configured to prevent a user from charging a monetary value to the card.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected configurations and not all possible implementations, and are not intended to limit the scope of the present disclosure.
FIG. 1 is a functional block diagram of an example vehicle system according to the present disclosure; and
FIG. 2 is a flowchart depicting an example method of controlling a vehicle system according to the present disclosure.

Corresponding reference numerals indicate corresponding parts throughout the drawings.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

The description provided herein is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. As used herein, the phrase at least one of A, B, and C should be construed to mean a logical (A or B or C), using a non-exclusive logical OR. It should be understood that one or more steps within a method may be executed in different order (or concurrently) without altering the principles of the present disclosure.

In this application, including the definitions below, the term module may be replaced with the term circuit. The term module may refer to, be part of, or include an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor (shared, dedicated, or group) that executes code; memory (shared, dedicated, or group) that stores code executed by a processor; other suitable hardware components that provide the described functionality; or a combination of some or all of the above, such as in a system-on-chip.

The term code, as used above, may include software, firmware, and/or microcode, and may refer to programs, routines, functions, classes, and/or objects. The term shared processor encompasses a single processor that executes some or all code from multiple modules. The term group processor encompasses a processor that, in combination with additional processors, executes some or all code from one or more modules. The term shared memory encompasses a single memory that stores some or all code from multiple modules. The term group memory encompasses a memory that, in combination with additional memories, stores some or all code from one or more modules. The term memory may be a subset of the term computer-readable medium. The term computer-readable medium does not encompass transitory electrical and electromagnetic signals propagating through a medium, and may therefore be considered tangible and non-transitory. Nonlimiting examples of a non-transitory tangible computer readable medium include nonvolatile memory, volatile memory, magnetic storage, and optical storage.

The apparatuses and methods described in this application may be partially or fully implemented by one or more computer programs executed by one or more processors. The computer programs include processor-executable instructions that are stored on at least one non-transitory tangible computer readable medium. The computer programs may also include and/or rely on stored data.

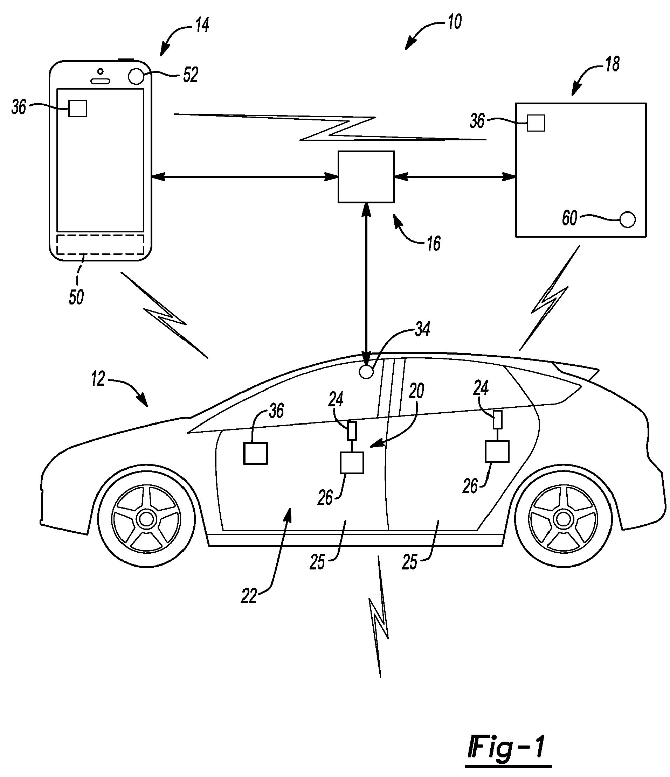

With reference to FIG. 1, a vehicle access system 10 is provided. The vehicle access system 10 may include a vehicle 12, a vehicle access device 14, a credit and/or debit card (e.g., card 16), and a vehicle control center 18. The vehicle 12 may be any known variety of motorized vehicle, such as a car, truck, or van, for example. In this regard, the vehicle 12 may be a private or commercial-type motor vehicle. In some configurations, the vehicle 12 may be one of a group of vehicles 12 that make up part of a fleet of vehicles, such as a fleet of rental vehicles or a fleet of commercial vehicles, such as delivery vehicles or service vehicles.

The vehicle 12 may include an access system 20 and a communication system 22. The access system 20 may include one or more locks 24 and a locking module 26. The locks 24 may permit and/or prevent access to the vehicle 12 through one or more access locations. For example, the vehicle 12 may further include one or more doors 25 and/or other access location(s). Each door 25 and/or access location of the vehicle 12 may include a lock 24. As will be described in more detail below, the locking module 26 may communicate with the lock(s) 24 to permit and/or prevent access to the vehicle 12. For example, the locking module 26 may receive a signal from the communication system 22, the vehicle access device 14, and/or the vehicle control center 18. The locking module 26 may control a state (e.g., locked or unlocked) of the lock(s) 24 based on the signal(s) received from the communication system 22, the vehicle access device 14 and/or the vehicle control center 18.

The communication system 22 may include one or more wireless communication nodes 34 and a communication application 36. As will be explained in more detail below, each wireless communication node 34 may be configured to communicate with the vehicle access device 12, the vehicle control center 18, and/or other wireless communication node(s) 34 on the vehicle 12. For example, the wireless communication nodes 34 may communicate with one another, and with the vehicle access device 14, through one or more wireless communication protocol, such as LIN Communication, short-range radio wave communication, Wi-Fi, BLUETOOTH ®, BLUETOOTH ® low energy (BLE), and/or near field communication (NFC). In this regard, the wireless communication nodes 34 may be referred to herein as NFC communication nodes 34.

The card 16 may include a credit card and/or debit card associated with the vehicle 12. For example, the card 16 may be the credit card and/or debit card that was used to reserve the end user's right to access and/or use the vehicle 12. As will be explained in more detail below, in some configurations, the vehicle 12 may include a card-receiving slot (not shown) that allows the end user to swipe, and send a monetary value to and/or from, the card 16. For example, the card-receiving slot may be located on an exterior location or surface (e.g., a door or a roof) of the vehicle 12, such that the end user can swipe the card 16 in the card-receiving slot prior to accessing the vehicle 12.

The vehicle access device 14 may include a mobile communication device such as a smartphone, a smart watch, or a computer (e.g., a tablet, laptop, personal digital assistant, etc.), for example. The vehicle access device 14 may include a battery 50, the communication application 36, and a wireless communication node 52. The vehicle access device 14 may communicate wirelessly with the vehicle control center 18 and/or the vehicle 12. For example, the vehicle access device 14 may communicate with the second vehicle access device 16, the vehicle control center 18, and/or the vehicle 12 using any suitable wireless communication protocol such as short-range radio wave communication, WiFi, BLUETOOTH®, BLE, and/or NFC, for example. In this regard, the wireless communication node 52 may be referred to herein as NFC communication node 52.

The vehicle control center 18 may include the communication application 36 and a wireless communication node 60. As will be explained in more detail below, the wireless communication node 60 may be configured to communicate with the vehicle 12 and/or the vehicle access device 14. For example, the wireless communication node 60 may communicate with the wireless communication node(s) 34 and/or 52 through one or more wireless communication protocols, such as short-range radio wave communication, WiFi, BLUETOOTH®, BLUETOOTH LOW ENERGY ®, and/or near field communication (NFC), for example. In this regard, the vehicle control center 18 may include the communication application 36.

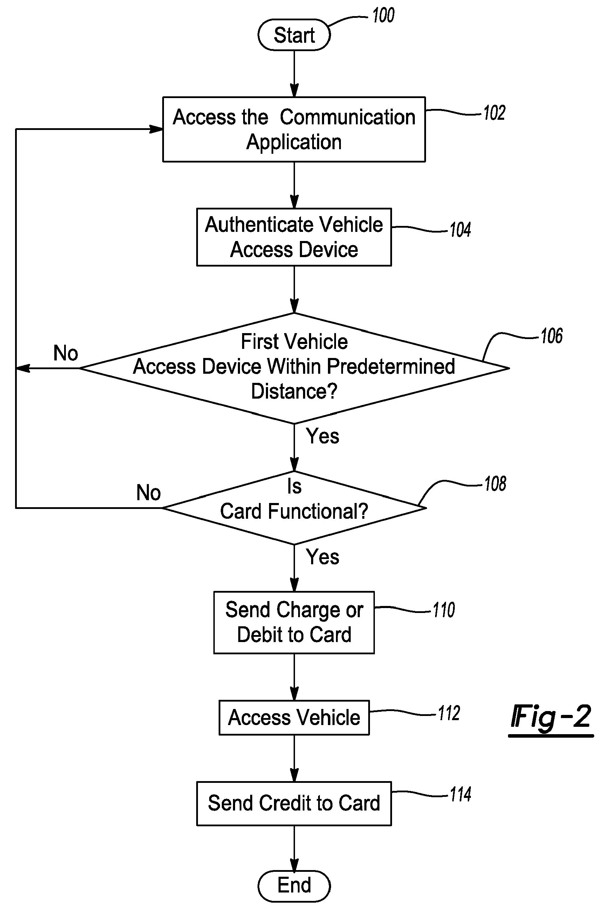

With reference to FIG. 2, a method for controlling the vehicle access system 10 begins at 100. As used herein, an end user may be a party that has previously received permission to utilize the vehicle 12. For example, in one implementation, the end user may be a party that has entered into a rental agreement for the vehicle 12 with the vehicle control center 18. In other implementations, the end user may be a party that has received permission to operate the vehicle 12 as an employee or a service provider, for example. In this regard, the vehicle access device 14 may receive a signal from the vehicle control center 18 allowing the end user to access the vehicle 12 using the vehicle access device 14. For example, the vehicle access device 14 may receive a signal allowing the vehicle access device 14 to change the state of the locks 24 and/or change a state (e.g., ON or OFF) of an engine (not shown) of the vehicle 12.

At 102, the method may include accessing the communication application 36. In particular, the end user may download and/or open the communication application 36 on the vehicle access device 14 and log into the communication application 36 using one or more authentication credentials (e.g., a username and/or password).

At 104, the method may include authenticating the identity of the wireless communication device 14. For example, at 104 the method may include transmitting an identification key between the vehicle 12 and the vehicle access device 14 to ensure that the vehicle access device 14 is permitted to access the vehicle 12.

At 106, the method may include determining whether the vehicle access device 14 is within a predetermined distance of the vehicle 12. In this regard, at 102 the method may further include moving the vehicle access device 14 toward the vehicle 12 and determining whether the wireless communication node 52 of the vehicle access device 14 is within a predetermined distance of the wireless communication node(s) 34 of the vehicle 12. In some configurations, at 106 the method may include contacting (e.g., tapping) the vehicle 12 with the vehicle access device 14.

If 106 is false, the method may return to 100. If 106 is true, the method may proceed to 108 where the communication application 36 may determine whether the card 16 is functional. In this regard, at 108 the communication application 36 may determine whether the card 16 is authorized to receive monetary charges. For example, the communication application 36 may communicate with a credit card processing center or service (not shown) to determine whether the card 16 has been disabled due to being lost, stolen, expired, etc. In this regard, if the card 16 is expired, lost, stolen, etc., the method may further include disabling the functionality of the card 16. For example, the method may include remotely accessing the functionality of the card 16 from the credit card processing center or service and disabling the functionality of the card 16.

If the method determines at 108 that the card 16 is not functional, or if the method otherwise disables the functionality of the card 16 at 108, the method may return to 100. If the method determines at 108 that the card 16 is functional, the method may proceed to 110 where the communication application 36 may charge and/or debit a monetary value to the card 16. For example, the communication application 36 may charge or debit a nominal amount such as one dollar to the card 16 in an effort to further authenticate the user. In particular, the communication application 36 associated with the vehicle 12 and/or the vehicle control center 18 may communicate with the communication application 36 associated with the vehicle access device 14 via the wireless communication nodes 34, 52, and/or 60 (e.g., via the NFC protocol) to initiate the charge or debit on the card 16 through a point-of-sale transaction. In this regard, in some implementations the end user may swipe the card 16 in the card-receiving slot (not shown) in order to initiate the charge or debit on the card 16. Again, this step is performed by the user in an effort to allow the vehicle 12 and/or the vehicle control center 18-via the communication application 36-to further authenticate the user and essentially double-check the step performed at 104 and/or permit authentication when the vehicle access device 14 is unavailable. For example, if the vehicle access device 14 does not have power (e.g., the battery 50 is dead), the end user may swipe the card 16 in order to initiate the charge or debit on the card 16.

At 112, the method may include accessing the vehicle 12 using the vehicle access device 14. For example, at 112 the method may include communicating with the access system 20 using the vehicle access device 14. In this regard, the method may include changing the state (e.g., lock or unlock) of the locks 24 using the vehicle access device 14 and/or changing a state (e.g., ON or OFF) of an engine (not shown) of the vehicle 12 using the vehicle access device 14.

At 114, the method may include crediting a monetary value to the card 16. For example, the communication application 36 may credit one dollar to the card 16. In particular, when the end user has finished using the vehicle 12, the communication application 36 of the vehicle 12 and/or the vehicle control center 18 may communicate with the communication application 36 associated with the vehicle access device 14 via the wireless communication nodes 34, 52, and/or 60 (e.g., via the NFC protocol) to initiate the credit on the card 16 through a point-of-sale transaction. In this regard, the method may include initiating the credit on the card 16 after a predetermined amount of time (e.g., the end of a rental period associated with the vehicle 12) and/or on at a predetermined time on a predetermined date (e.g., the termination date of a rental period associated with the vehicle 12). The amount credited may be equal to the original amount charged at step 110, as the amount originally charged was only charged in an effort to verify the identity of the user.

The following Clauses provide an exemplary configuration and method for the vehicle access system described above.
Clause 1: A method for accessing a vehicle, the method comprising placing a vehicle access device within a predetermined distance of a vehicle, charging a first monetary value to a card, accessing the vehicle, and crediting a second monetary value to the card.
Clause 2: The method of Clause 1, wherein placing the vehicle access device within a predetermined distance of the vehicle includes contacting the vehicle with the vehicle access device.
Clause 3: The method of Clause 1, wherein the card is one of a credit card and a debit card.
Clause 4: The method of Clause 1, wherein accessing the vehicle includes changing a state of a door lock of the vehicle.
Clause 5: The method of Clause 1, wherein accessing the vehicle includes changing a state of an engine of the vehicle.
Clause 6: The method of Clause 1, wherein the first monetary value is less than or equal to one dollar.
Clause 7: The method of Clause 1, wherein the second monetary value is equal to the first monetary value.
Clause 8: The method of Clause 1, wherein charging a first monetary value to a card includes communicating between the vehicle and the vehicle access device using a near field communication protocol.
Clause 9: The method of Clause 1, wherein the vehicle access device includes one of a smartphone, a smart watch, and a tablet computing device.
Clause 10: The method of Clause 1, further comprising disabling the functionality of the card.
Clause 11: The method of Clause 10, wherein disabling the functionality of the card includes preventing a user from charging a monetary value to the card.
Clause 12: The method of Clause 1, further comprising swiping the card through a card-receiving slot associated with the vehicle.
Clause 13: A system comprising a wireless communication node that communicates with at least one of a vehicle access device and a vehicle control center, a communication application that charges a first monetary value to a card and credits a second monetary value to the card, and a locking module that permits access to a vehicle after the first monetary value is charged to the card.
Clause 14: The system of Clause 13, wherein the card is one of a credit card and a debit card.
Clause 15: The system of Clause 13, further comprising a lock in communication with the locking module.
Clause 16: The system of Clause 13, wherein the first monetary value is less than or equal to one dollar.
Clause 17: The system of Clause 13, wherein the second monetary value is equal to the first monetary value.
Clause 18: The system of Clause 13, wherein the wireless communication node includes a near field communication node.
Clause 19: The system of Clause 13, wherein the vehicle access device includes one of a smartphone, a smart watch, and a tablet computing device.
Clause 20: The system of Clause 13, wherein the communication application is configured to prevent a user from charging a monetary value to the card.

The foregoing description has been provided for purposes of illustration and description. It is not intended to be exhaustive or to limit the disclosure. Individual elements or features of a particular configuration are generally not limited to that particular configuration, but, where applicable, are interchangeable and can be used in a selected configuration, even if not specifically shown or described. The same may also be varied in many ways. Such variations are not to be regarded as a departure from the disclosure, and all such modifications are intended to be included within the scope of the disclosure.

## Claims

1. A method for accessing a vehicle, the method comprising:
placing a vehicle access device within a predetermined distance of a vehicle;
charging a first monetary value to a card;
accessing the vehicle; and
crediting a second monetary value to the card.

2. The method of claim 1, wherein placing the vehicle access device within a predetermined distance of the vehicle includes contacting the vehicle with the vehicle access device.

3. The method of claims 1 or 2, wherein accessing the vehicle includes changing a state of a door lock of the vehicle.

4. The method of any of the preceding claims, wherein accessing the vehicle includes changing a state of an engine of the vehicle.

5. The method of any of the preceding claims, wherein charging a first monetary value to a card includes communicating between the vehicle and the vehicle access device using a near field communication protocol.

6. The method of any of the preceding claims, wherein the vehicle access device includes one of a smartphone, a smart watch, and a tablet computing device.

7. The method of any of the preceding claims, further comprising disabling the functionality of the card.

8. The method of claim 7, wherein disabling the functionality of the card includes preventing a user from charging a monetary value to the card.

9. The method of any of the preceding claims, further comprising swiping the card through a card-receiving slot associated with the vehicle.

10. A system comprising:
a wireless communication node that communicates with at least one of a vehicle access device and a vehicle control center;
a communication application that charges a first monetary value to a card and credits a second monetary value to the card; and
a locking module that permits access to a vehicle after the first monetary value is charged to the card.

11. The system of claim 10, further comprising a lock in communication with the locking module.

12. The system of any of claims 10 or 11, wherein the wireless communication node includes a near field communication node.

13. The system of any of claims 10 to 12, wherein the vehicle access device includes one of a smartphone, a smart watch, and a tablet computing device.

14. The system of any of claims 10 to 13, wherein the communication application is configured to prevent a user from charging a monetary value to the card.
